# EUROPEAN PATENT APPLICATION

(11) **EP 3 069 974 A1**
(43) Date of publication of application: **21.09.2016**
(21) Application number: 16161093.6
(22) Date of filing: 18.03.2016
(51) Int. Cl.: B62J 29/00, B60R 1/10

(54) **REFLECTING MIRROR STRUCTURE AND VEHICLES COMPRISING THE SAME**

(30) Priority: 18.03.2015 TW 104204034 U
(71) Applicant: Jiyonson Co., Ltd., Taipei City 112 (TW)
(72) Inventor: TUN, Yun-Long, 112 Taipei City (TW)
(74) Representative: dompatent von Kreisler Selting Werner - Partnerschaft von Patent- und Rechtsanwälten mbB

(57) **Abstract**

A reflecting mirror structure (10) used for vehicle is provided. The vehicle includes a head tube (20), handlebars (30) disposed at upper end of the head tube, and a front wheel (40) disposed at lower end of the head tube. The reflecting mirror structure has first and second mirrors, the first mirror (110) is disposed at the head tube, and the second mirror (120) is disposed at the head tube and between the first mirror and the front wheel. A multi-wheel vehicle (1) is also provided to have a head tube, handlebars disposed at an upper end of the head tube, a front wheel disposed at a lower end of the head tube, and the aforesaid reflecting mirror structure. A vehicle is further provided to have a stem and a reflecting mirror structure. Angles of these two mirrors can be adjusted depending on user's light reflection condition.

## Description

### CROSS-REFERENCES TO RELATED APPLICATIONS

This application claims priority to Taiwan Utility Model Application No. 104204034 filed on March 18, 2015, which is herein incorporated by reference in its entirety.

### BACKGROUND OF THE INVENTION

### Field of the Invention

The present invention relates to a reflecting mirror structure and a vehicle comprising the same, and more particularly, relates to a reflecting mirror structure that can reflect images in front of it and a wheel vehicle comprising the same.

### Descriptions of the Related Art

Two-wheel vehicles (e.g., bicycles, motorcycles or the like) usually cannot provide riders with comfortable seats due to the limited overall structural space thereof. The design of seats of some two-wheel vehicles is even not ergonomic at all, so the riders have to ride the two-wheel vehicles in a posture that is hard to maintain for a long time.

Taking a road bicycle as an example, the seat is usually higher than handlebars of the bicycle, so the rider has to bend his/her waist forward, sometimes even for more than 90 degrees, in order to hold the handlebars and support the weight of his/her upper body with arms. The upper body of the rider remains generally horizontal in this riding posture, so the rider has to raise his/her head with efforts to see the road in front of him/her; this riding posture cannot be maintained for a long time. Similarly, in order to reduce the wind resistance, the body of a racing motorcycle is designed to make it convenient for the rider to bend over the motorcycle; however, it also requires the rider to raise his/her head with efforts to see the road in front of him/her, which is also a burden for the rider.

Additionally, it is possible that the condition of the road right ahead of the front wheel is neglected by the rider because he/she shall pay more attention to the road at a further distance. Consequently, the rider may slip and get injured if the front wheel rides into a puddle or onto moss, peels, garbage, leaves or the like.

Accordingly, a need exists in the art to make improvement on the aforesaid drawbacks.

### SUMMARY OF THE INVENTION

An objective of the present invention is to provide a reflecting mirror structure for a multi-wheel vehicle and a vehicle, which at least solve the technical problem of enabling a rider of the vehicle to clearly see the road in front of him/her in a more comfortable posture.

To achieve the aforesaid objective, the reflecting mirror structure disclosed in the present invention is disposed on a multi-wheel vehicle, and the multi-wheel vehicle comprises a head tube, a pair of handlebars disposed at an upper end of the head tube, and a front wheel disposed at a lower end of the head tube. The reflecting mirror structure comprises a first mirror disposed at the head tube, and a second mirror disposed at the head tube and between the first mirror and the front wheel. Thereby, an image in front of the multi-wheel vehicle is reflected by the first mirror to the second mirror and then reflected by the second mirror to a rider.

To achieve the aforesaid objective, the present invention additionally discloses a multi-wheel vehicle. The multi-wheel vehicle comprises a head tube, a pair of handlebars disposed at an upper end of the head tube, a front wheel disposed at a lower end of the head tube, and a reflecting mirror structure as described above, wherein the reflecting mirror structure is disposed at the head tube.

To achieve the aforesaid objective, the present invention further discloses a vehicle which comprises a stem and a reflecting mirror structure. The reflecting mirror structure is disposed in front of the stem and comprises a first mirror and a second mirror located in front of and below the first mirror.

The detailed technology and preferred embodiments implemented for the subject invention are described in the following paragraphs accompanying the appended drawings for people skilled in this field to well appreciate the features of the claimed invention.

### BRIEF DESCRIPTION OF THE DRAWINGS

**FIG 1** is a schematic perspective view of a reflecting mirror structure according to a first embodiment of the present invention;
**FIG 2** is a schematic side view of the reflecting mirror structure according to the first embodiment of the present invention after being installed to a vehicle;
**FIG 3** is a schematic functional view of the reflecting mirror structure according to the first embodiment of the present invention;
**FIG 4** is another schematic side view of the reflecting mirror structure according to the first embodiment of the present invention; and
**FIG 5** is a schematic side view of a vehicle according to a second embodiment of the present invention.

### DESCRIPTION OF THE PREFERRED EMBODIMENT

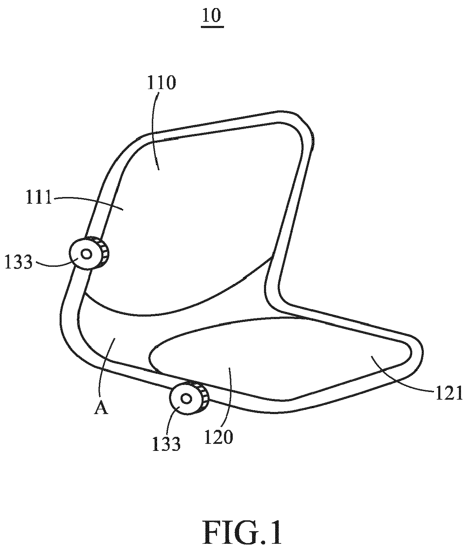

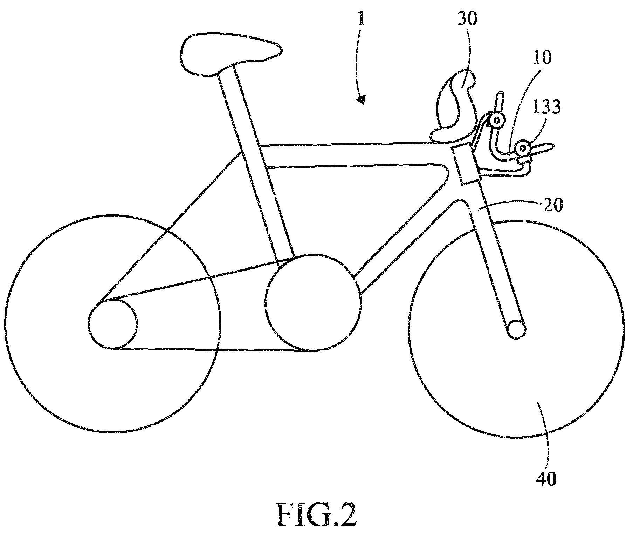

First, please refer to **FIG. 1** and **FIG 2****,** which are respectively a schematic perspective view of a reflecting mirror structure according to a first embodiment of the present invention and a schematic side view of the reflecting mirror structure after being installed to a vehicle. The reflecting mirror structure according to the first embodiment of the present invention may be used in a multi-wheel vehicle, such as three-wheel vehicle or four-wheel vehicle (e.g., an electric personal assistive mobility device or an all-terrain vehicle) or two-wheel vehicle (e.g., a bicycle or a motorcycle). The following embodiments are described by taking the two wheel vehicle (i.e. bicycle) as an example.

A multi-wheel vehicle **1** may comprise a head tube **20,** a pair of handlebars **30** disposed at an upper end of the head tube **20,** and a front wheel **40** disposed at a lower end of the head tube **20.** That is, the handlebars **30** and the front wheel **40** are disposed respectively at the upper and lower ends of the head tube **20.** A reflecting mirror structure **10** may be fixed on the head tube **20** and between the handlebars **30** and the front wheel **40** and faces towards a front direction of the multi-wheel vehicle **1.** Preferably, when the rider rotates the handlebars **30,** the reflecting mirror structure **10** may also rotate together with the handlebars **30.**

Specifically, the reflecting mirror structure **10** comprises a first mirror **110** disposed on the head tube **20** and a second mirror **120,** and the first mirror **110** may be located between the handlebars **30** and the front wheel **40** or located between the two handlebars **30.** In other words, the first mirror **110** is installed on the head tube **20** at a level lower than the handlebars **30** and higher than the front wheel **40,** or is generally at the same level as those of the handlebars **30.** The second mirror **120** is disposed on the head tube **20** and between the first mirror **110** and the front wheel **40.** In other words, the second mirror **120** is also installed on the head tube **20** at a level lower than the first mirror **110** and higher than the front wheel **40.** Preferably, there may be a gap **A** between the first mirror **110** and the second mirror **120** so that the airflow can pass therethrough to reduce the air resistance during the operation of the vehicle.

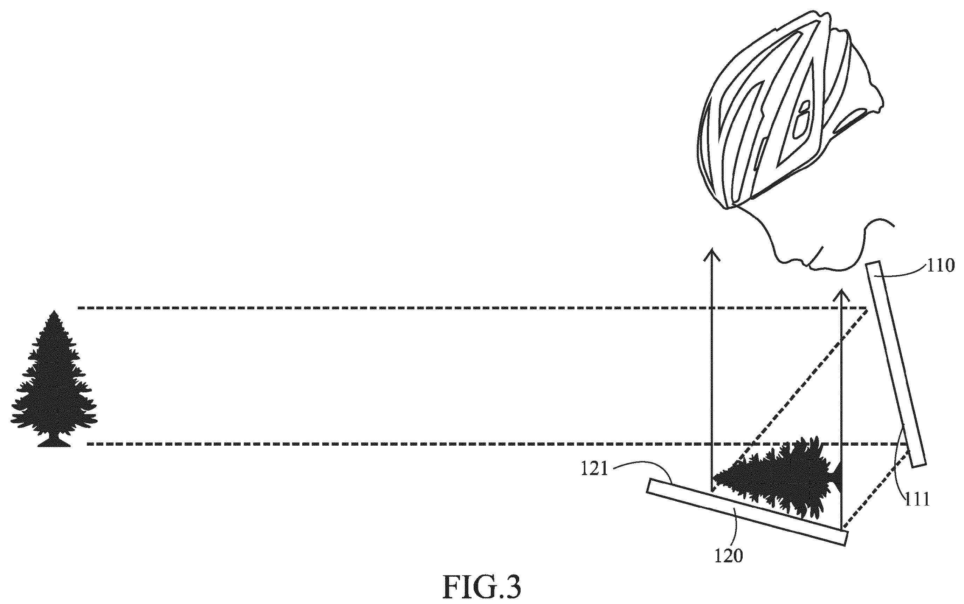

Next please refer to **FIG 3** together, and **FIG 3** is a schematic functional view of the reflecting mirror structure according to the first embodiment of the present invention. An image (i.e., the road) in front of the multi-wheel vehicle **1** may be reflected by the first mirror **110** to the second mirror **120** and then reflected by the second mirror **120** to a rider. Therefore, when the rider is riding with his/her bowed, he/she can observe the road in front of the multi-wheel vehicle **1** via the reflecting mirror structure **10.** Meanwhile, the rider can also look around the stem with the peripheral vision so that he/she can make quick response to bad road conditions in the advancing direction and prevent the front wheel from directly colliding against the obstacles to cause overturn of the multi-wheel vehicle **1** or injury of the rider.

Both the first mirror **110** and the second mirror **120** may be plane mirrors or concave mirrors, or one of them may be a convex mirror and the other one may be a concave mirror. For example, the first mirror **110** is a convex mirror and the second mirror **120** is a concave mirror so that the image in front of the multi-wheel vehicle **1,** after being reflected by the first mirror **110** and the second mirror **120,** will not be deformed and distorted and thus not adversely affect the rider in distance judgment.

The first mirror **110** may have a first reflecting surface **111,** and the first reflecting surface **111** may be perpendicular to the horizontal plane or face towards a front direction of the multi-wheel vehicle **1** and be inclined towards the front wheel **40.** That is, the first reflecting surface **111** has an angle of depression. The second mirror **120** has a second reflecting surface **121,** and the second reflecting surface **121** may be parallel to the horizontal plane or face towards an upward direction of the multi-wheel vehicle **1** and be inclined towards the head tube **20.** That is, the second reflecting surface **121** has an angle of elevation.

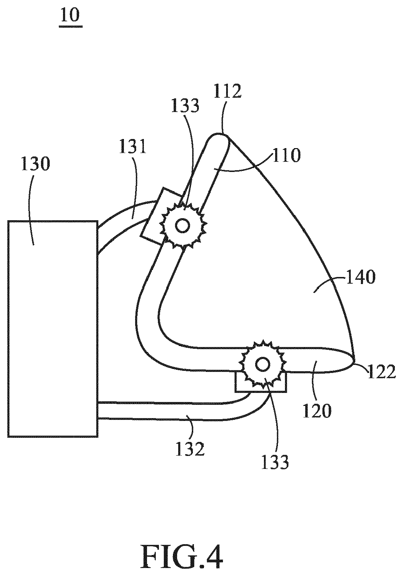

Next please refer to **FIG 4****,** which is a schematic side view of the reflecting mirror structure according to the first embodiment of the present invention. The reflecting mirror structure **10** may further comprise a fixing mechanism **130** disposed between the first mirror **110,** the second mirror **120** and the head tube **20,** and the first mirror **110** and the second mirror **120** are fixed to the head tube **20** via the fixing mechanism **130.** Thereby, the position and the angle of the reflecting mirror structure **10** relative to the head tube **20** can be adjusted so that the reflecting mirror structure **10** can be adapted for use by riders of different Somatotype or size.

The fixing mechanism **130** may have a first adjusting element **131** and/or a second adjusting element **132.** The first mirror **110** may be disposed on the head tube **20** via the first adjusting element **131** so that the first adjusting element **131** may be adapted to adjust and fix the position and the angle of the first mirror **110** relative to the head tube **20.** The second mirror **120** may be disposed on the head tube **20** via the second adjusting element **132** so that the second adjusting element **132** may be adapted to adjust and fix the position and the angle of the second mirror **120** relative to the head tube **20.** For example, each of the first adjusting element **131** and the second adjusting element **132** may be a rotary knob. When the rotary knob is unscrewed, the position and the angle of the first mirror **110** and the second mirror **120** can be adjusted; and when the rotary knob is screwed, the position and the angle of the first mirror **110** and the second mirror **120** are fixed.

The fixing and the second adjusting elements **131** and **132** may be thumb wheels **133** which are fixed to the first and second mirrors **110** and **120** respectively. The thumb wheels **133** can be rotated by the rider to rotate the first and second mirrors **110** and **120;** thus the angles of the first and second mirrors **110** and **120** to the rider can be adjusted to the desired ones.

Thereby, the position or the angle of the first mirror **110** and that of the second mirror **120** can be adjusted respectively or can be adjusted simultaneously. Through the adjustment, the rider can decide the image to be observed in front of the multi-wheel vehicle 1. For example, if the image to be observed by the rider is desired to include a relatively large area of ground, then the first mirror **110** may be adjusted to be more inclined towards the ground.

The reflecting mirror structure **10** may further comprise a protective cover **140** made of a transparent material (e.g., made of a material such as glass, acryl or plastic, etc.). The protective cover **140** is disposed between the first mirror **110** and the second mirror **120** to cover the first mirror **110** and the second mirror **120.** Specifically, the protective cover **140** extends from an upper edge **112** of the first mirror **110** to a front edge **122** of the second mirror **120,** so the protective cover **140** can shield the first reflecting surface **111** and the second reflecting surface **121.** Moreover, the protective cover **140** may be in a smooth streamline form to reduce the wind resistance.

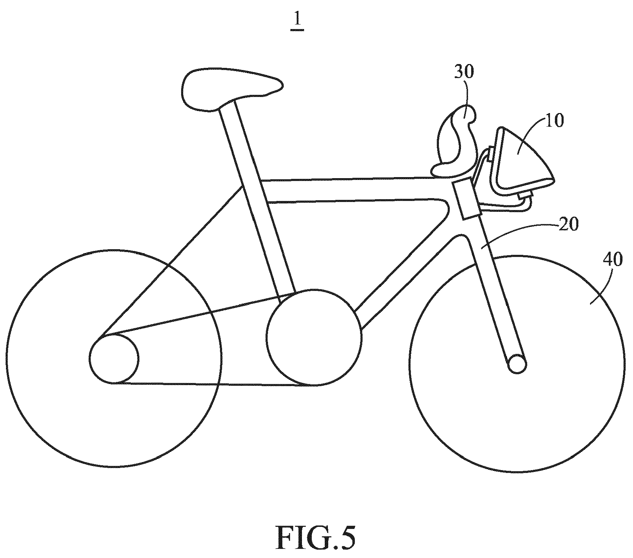

Next please refer to **FIG 5****,** which is a schematic side view of a multi-wheel vehicle according to a second embodiment of the present invention. The multi-wheel vehicle may comprise the aforesaid reflecting mirror structure **10,** so reference may be made to the reflecting mirror structure **10** for the technical contents of the vehicle.

The vehicle **1** of the second embodiment comprises a reflecting mirror structure **10,** a head tube **20,** a pair of handlebars **30** and a front wheel **40.** The handlebars **30** are disposed at an upper end of the head tube **20,** and the front wheel **40** is disposed at a lower end of the head tube **20.** In other words, the handlebars **30** and the front wheel **40** are respectively disposed at two opposite ends of the head tube **20.** Similarly, the reflecting mirror structure **10** of the vehicle **1** may be fixed on the head tube **20** and between the handlebars **30** and the front wheel **40,** and the reflecting mirror structure **10** faces towards a front direction of the multi-wheel vehicle **1.**

Moreover, similar to the reflecting mirror structure **10** of the first embodiment, the position of the reflecting mirror structure **10** of the multi-wheel vehicle **1** of the second embodiment relative to the head tube **20** may be adjusted so that the reflecting mirror structure **10** can be adapted for use by riders of different body figures. The multi-wheel vehicle **1** of the second embodiment may also have a protective cover **140** to protect the reflecting mirror structure **10.**

A third embodiment of the present invention further provides a vehicle which comprises a reflecting mirror structure. Reference may be made to the first embodiment and the second embodiment for the technical contents of the vehicle of the third embodiment, so the vehicle of the third embodiment is not further illustrated in the attached drawings. The vehicle of the third embodiment may be a three-wheel vehicle or a four-wheel vehicle (e.g., an electric personal assistive mobility device or an all terrain vehicle), or may be a single-wheel vehicle or a vehicle without wheels (e.g., a jet ski, a sleigh or the like).

Specifically, the vehicle of the third embodiment comprises a stem and a reflecting mirror structure. The stem can control the advancing direction of the vehicle, the reflecting mirror structure may be disposed in front of the stem and may have a first mirror and a second mirror, and the second mirror may be located in front of and below the first mirror. For vehicles without the stem, the road ahead of the rider can also be reflected to the rider simply by disposing the reflecting mirror structure in front of the vehicle.

The first mirror may have a first reflecting surface which may face towards a front direction of the vehicle and be inclined downwards relative to the vehicle. The second mirror may have a second reflecting surface which may face towards an upward direction of the vehicle and be inclined backwards relative to the vehicle. Therefore, an image in front of the vehicle may be reflected by the first mirror to the second mirror and then reflected by the second mirror to a rider.

The vehicle of the third embodiment may further comprise a fixing mechanism which may be disposed between the first mirror, the second mirror and the stem, and the first mirror and the second mirror may be fixed to the stem via the fixing mechanism. Specifically, the fixing mechanism may have a first adjusting element and/or a second adjusting element, the first mirror may be disposed on the stem via the first adjusting element, and the first adjusting element is adapted to adjust and fix the position and the angle of the first mirror relative to the stem. The second mirror may be disposed on the stem via the second adjusting element, and the second adjusting element is adapted to adjust and fix the position and the angle of the second mirror relative to the stem.

To reduce the wind resistance, there may be a gap between the first mirror and the second mirror. Another optional scheme for reducing the wind resistance is that the vehicle may further comprise a protective cover, and the protective cover is disposed between the first mirror and the second mirror to cover the first mirror and the second mirror. The protective cover is in a streamline form.

According to the above descriptions, the reflecting mirror structure and the vehicle of the present invention at least have the following features: the image in front of the vehicle is reflected to the rider through cooperation of the first reflecting surface of the first mirror and the second reflecting surface of the second mirror so that the rider can ride the vehicle in a more relaxing and energy-saving posture. Thereby, the rider can not only easily see the road in front of him/her without raising his/her head with great efforts, but also see the road around the stem incidentally.

The above disclosure is related to the detailed technical contents and inventive features thereof. People skilled in this field may proceed with a variety of modifications and replacements based on the disclosures and suggestions of the invention as described without departing from the characteristics thereof. Nevertheless, although such modifications and replacements are not fully disclosed in the above descriptions, they have substantially been covered in the following claims as appended.

## Claims

1. A reflecting mirror structure for a multi-wheel vehicle, the multi-wheel vehicle comprising a head tube, a pair of handlebars disposed at an upper end of the head tube, and a front wheel disposed at a lower end of the head tube, the reflecting mirror structure comprising:
a first mirror disposed at the head tube; and
a second mirror disposed at the head tube and between the first mirror and the front wheel.

2. The reflecting mirror structure of Claim 1, wherein the first mirror has a first reflecting surface, which faces towards a front direction of the multi-wheel vehicle and is inclined towards the front wheel.

3. The reflecting mirror structure of Claim 1, wherein the second mirror has a second reflecting surface, which faces towards an upward direction of the multi-wheel vehicle and is inclined towards the head tube.

4. The reflecting mirror structure of Claim 1, wherein the first mirror is located between the pair of handlebars and the front wheel, or the first mirror is located between the pair of handlebars.

5. The reflecting mirror structure of Claim 1, further comprising a fixing mechanism disposed between the first mirror, the second mirror and the head tube, and the first mirror and the second mirror are fixed to the head tube via the fixing mechanism.

6. The reflecting mirror structure of Claim 5, wherein the fixing mechanism has a first adjusting element, the first mirror is disposed on the head tube via the first adjusting element, and the first adjusting element is adapted to adjust and fix a position and an angle of the first mirror relative to the head tube.

7. The reflecting mirror structure of Claim 5, wherein the fixing mechanism has a second adjusting element, the second mirror is disposed on the head tube via the second adjusting element, and the second adjusting element is adapted to adjust and fix a position and an angle of the second mirror relative to the head tube.

8. The reflecting mirror structure of Claim 1, further comprising a protective cover disposed between the first mirror and the second mirror to cover the first mirror and the second mirror.

9. A vehicle, comprising:
a stem; and
a reflecting mirror structure disposed in front of the stem, comprising a first mirror and a second mirror located in front of and below the first mirror.

10. The vehicle of Claim 9, wherein the first mirror has a first reflecting surface, which faces towards a front direction of the vehicle and is inclined downwards relative to the vehicle.

11. The vehicle of Claim 9, wherein the second mirror has a second reflecting surface, which faces towards an upward direction of the vehicle and is inclined backwards relative to the vehicle.

12. The vehicle of Claim 9, further comprising a fixing mechanism disposed between the first mirror, the second mirror and the stem, and the first mirror and the second mirror are fixed to the stem via the fixing mechanism.

13. The vehicle of Claim 12, wherein the fixing mechanism has a first adjusting element, the first mirror is disposed on the stem via the first adjusting element, and the first adjusting element is adapted to adjust and fix the position and the angle of the first mirror relative to the stem.

14. The vehicle of Claim 12, wherein the fixing mechanism has a second adjusting element, the second mirror is disposed on the stem via the second adjusting element, and the second adjusting element is adapted to adjust and fix the position and the angle of the second mirror relative to the stem.

15. The vehicle of Claim 9, further comprising a protective cover disposed between the first mirror and the second mirror to cover the first mirror and the second mirror.
